# FASCICULE DE BREVET EUROPEEN

(11) **EP 2 404 824 B1**
(45) Date de publication et mention de la délivrance du brevet: **09.09.2015**
(21) Numéro de dépôt: 11305807.7
(22) Date de dépôt: 24.06.2011
(51) Int. Cl.: B64C 1/06, B64C 1/12

(54) **Structure d'aeronef et Procédé de réalisation d'une telle structure**
Luftfahrzeugstruktur und Herstellungsverfahren für eine solche Struktur
Aircraft structure and Method for producing such a structure

(30) Priorité: 08.07.2010 FR 1055564
(43) Date de publication de la demande: 11.01.2012
(73) Titulaire: Airbus Opérations SAS, 31060 Toulouse (FR)
(72) Inventeur: Mialhe, Christophe, 81500 Giroussens (FR); Bonnet, Hélène, 31530 Le Castera (FR); Peltier, Louis, 31700 Blagnac (FR)
(74) Mandataire: Fantin, Laurent

(56) Documents cités:
- WO-A1-2009/037006
- DE-A1-102006 002 248
- GB-A- 830 072
- US-A- 1 966 933
- US-A- 4 531 695
- US-A1- 2010 025 529

## Description

La présente invention se rapporte à un procédé de réalisation d'une structure d'aéronef ainsi qu'à une structure obtenue à partir dudit procédé.

De manière connue, le fuselage d'un aéronef comprend une structure assurant principalement la fonction de reprise des efforts sur laquelle est rapportée une enveloppe, appelée par la suite enveloppe aérodynamique, conférant à l'aéronef ses propriétés aérodynamiques. Ainsi, la structure comprend des poutres, des cadres, des lisses, des raidisseurs ou autres, assemblés entre eux. Ces éléments peuvent être métalliques et/ou en matériau composite.

De manière connue, l'enveloppe aérodynamique se présente sous la forme d'une juxtaposition de panneaux ou tronçon complet de tôles métalliques reliés à la structure par rivetage ou tous moyens appropriés. En variante, ces panneaux peuvent être en matériau composite.

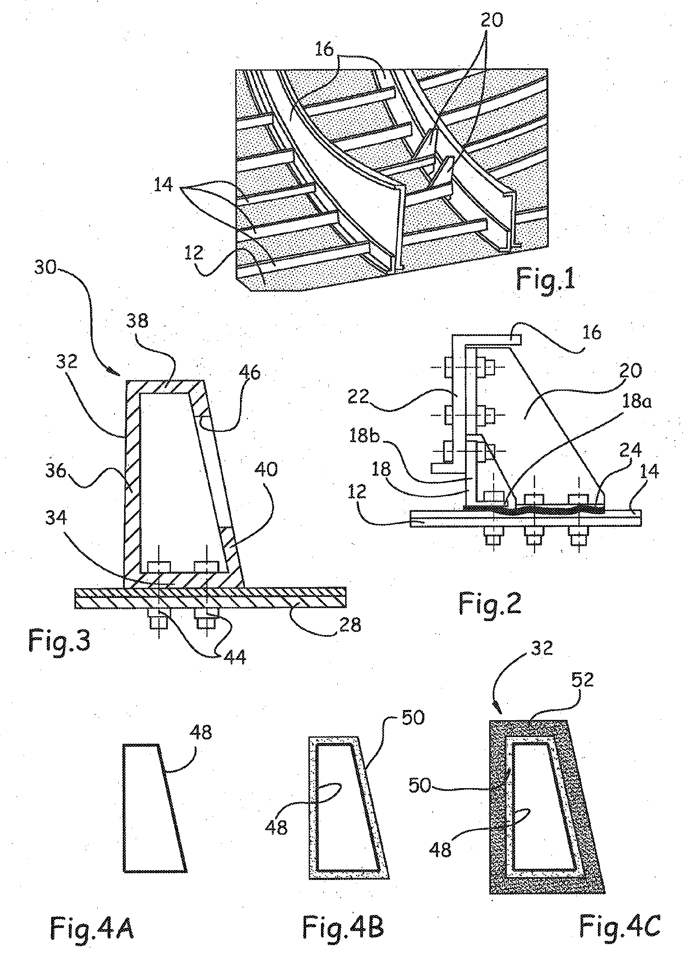

Sur la figure 1, on a représenté une partie d'un fuselage d'aéronef comportant une peau 12, des lisses 14 rapportées sur la paroi intérieure de la peau et disposées selon la direction longitudinale de l'aéronef, et des cadres 16 sur lesquels sont rapportées les lisses 14 et la peau 12, disposés dans des plans sensiblement perpendiculaires à la direction longitudinale.

Chaque cadre assure la fonction de raidisseur orbital alors que les lisses assurent la fonction de raidisseur longitudinal.

De manière connue, un cadre 16 est relié à la peau 12 par l'intermédiaire de clips ou cornières 18, comme illustré sur la figure 2. Chaque cadre 16 est en outre relié à une lisse 14 par l'intermédiaire d'un stabilisateur 20. Généralement, un cadre a un profil en J, en I, en Z, en C ou en L avec une partie centrale 22 disposée dans un plan perpendiculaire à la peau ou à la direction longitudinale. Ce type de section permet d'obtenir une raideur importante dans le plan contenant la partie centrale. En complément, les stabilisateurs 20 augmentent la raideur du cadre dans un plan perpendiculaire à la partie centrale 22.

Chaque clip ou cornière 18 comprend une première aile 18a plaquée contre la paroi intérieure de la lisse 14 et une seconde aile 18b reliée au cadre 16. En parallèle, un stabilisateur 20 comprend une partie centrale sous forme d'une plaque perpendiculaire à la partie centrale du cadre, avec une première extrémité reliée à une lisse 14 et une seconde extrémité reliée au cadre 16.

L'un des inconvénients des assemblages décrits ci-dessous est que, les éléments étant assemblés deux par deux, il existe quatre liaisons de deux éléments. Chaque liaison imposant des contraintes géométriques et dimensionnelles à deux surfaces, une pour chaque élément lié, l'assemblage impose au total huit contraintes géométriques et dimensionnelles qui s'ajoutent aux contraintes géométriques et dimensionnelles prévues au niveau de la surface extérieure de la peau et celle du cadre qui n'est pas en contact avec le stabilisateur 20.

Un autre inconvénient est que, chaque cadre ayant un profil ouvert constitué de pans formant des angles à 90° théoriquement, il apparait après usinage ou après la cuisson un défaut angulaire entre les pans qui forment entre eux un angle différent de l'angle théorique. Ce défaut géométrique impose au niveau des liaisons des cales 24 pour le compenser et assurer un positionnement correct des différents éléments de l'assemblage.

Un procédé d'assemblage de ces éléments connus consiste à prévoir au moins quatre familles d'outillage. Ainsi, selon un mode opératoire, les lisses 14 sont solidarisées à la peau 12 sur un premier outillage. En suivant, la peau 12 et les lisses 14 sont mises en forme sur un deuxième outillage, Ce deuxième outillage doit être suffisamment rigide pour assurer la reprise des efforts lors de la mise en forme de la peau. Après l'ajout des clips 18 sur un troisième outillage, l'ensemble constitué des cadres 16 et des clips est solidarisé à la lisse 14 sur un quatrième outillage en ayant ajusté la position relative de l'ensemble (cadres 16 et clips 18) et de la lisse 14 grâce à des cales 24. Enfin, on peut prévoir un cinquième outillage pour la mise en place des stabilisateurs 20.

La multiplication des pièces à assembler et des outillages, des contraintes dimensionnelles et géométriques ainsi que la mise en place de cales augmentent les temps et les coûts de production.

Dans le domaine des ailes d'aéronef, le document US2010/0025529 propose un procédé d'assemblage de deux raidisseurs susceptibles d'être reliés à 90° grâce à un élément de liaison sous forme d'un profilé creux triangulaire pour remplacer une cornière en forme de T, chaque raidisseur à relier étant solidarisé à une face extérieure du profilé creux qui assure la liaison entre les deux raidisseurs. Pour assurer la liaison entre la peau et un cadre, on pourrait envisager d'utiliser un profilé creux triangulaire analogue à celui décrit dans le document US-2010/0025529 pour remplacer les clips ou les cornières 18. Cependant, l'utilisation de ce type d'éléments de liaison ne réduirait pas le nombre d'éléments à assembler, de contraintes géométriques et dimensionnelles et ne supprimerait pas l'ajout de cales pour compenser les défauts géométriques du cadre.

En matière de structures d'avion, on connait d'après les documents DE-10.2006.002248, qui est considéré l'état de la technique le plus proche, et WO-2009/037006 des cadres qui assurent deux fonctions à savoir la fonction structurelle et la fonction de conduit. Selon le document WO-2009/037006, le cadre se présente sous la forme d'un conduit relié à la peau par des supports. Par conséquent, ce type d'assemblage requiert en plus des cadres des éléments de liaison entre les cadres et la peau. Ces éléments complexifient l'assemblage. Selon un autre inconvénient, comme précédemment, la peau est mise en forme sur un outillage spécifique si bien que ses formes ne sont pas parfaitement adaptées à celles des cadres et qu'il est nécessaire d'intercaler toujours des cales entre les supports et la peau.

selon le document DE-10.2006.002248, le cadre se présente sous la forme d'un raidisseur en U (profil ouvert) dans lequel se loge un conduit ou comportant une paroi qui délimite avec une partie du profil en U un conduit. Selon un mode de réalisation, le profil en U et la paroi peuvent être réalisés d'un seul tenant, la paroi n'étant pas en contact avec la peau pour permettre la mise en place d'un isolant. Ainsi, selon ce document le cadre a une section creuse avec en périphérie deux pattes qui assurent la liaison entre la section creuse et la peau. Cette solution permet de simplifier l'assemblage en supprimant les éléments de liaison disjoints du cadre.

Toutefois, comme précédemment, la peau est mise en forme sur un outillage spécifique si bien que ses formes ne sont pas parfaitement adaptées à celles des cadres et qu'il est nécessaire d'intercaler toujours des cales entre les cadres et la peau. En effet, les cadres décrits dans ce document, et plus particulièrement les pattes assurant la liaison entre la section creuse et la peau ne sont pas suffisamment rigides pour permettre d'utiliser les cadres comme outillage,

La présente invention vise à pallier aux inconvénients de l'art antérieur. A cet effet, l'invention a pour premier objet un procédé de réalisation d'une structure d'aéronef permettant de réduire le nombre d'éléments à assembler et par conséquence la masse embarquée, de réduire le nombre de contraintes géométriques et dimensionnelles et ne nécessitant pas l'utilisation de cales pour ajuster entre eux les éléments à assembler.

Un second objet de l'invention concerne une structure d'aéronef comportant une peau renforcée selon deux directions, par une première famille de raidisseurs appelés lisses disposées selon la direction longitudinale de l'aéronef et par une seconde famille de raidisseurs appelés cadres disposés dans des plans perpendiculaires à la direction longitudinale et qui assurent la reprise des efforts orbitaux, caractérisée en ce qu'au moins un cadre a une section creuse délimitée par un profil fermé, réalisé pour une section donnée d'un seul tenant, dont une portion est en contact avec la peau.

Cette géométrie confère au cadre une grande rigidité si bien qu'il est possible d'utiliser le cadre comme surface d'appui lors de la mise en forme de la peau. Cette dernière étant mise en forme directement sur le cadre, ces formes sont ajustées à celles du cadre si bien qu'il n'est plus nécessaire de prévoir de cales. D'autres caractéristiques et avantages ressortiront de la description qui va suivre de l'invention, description donnée à titre d'exemple uniquement, en regard des dessins annexés sur lesquels :
- la figure 1 est une vue en perspective depuis l'intérieur d'une partie d'un fuselage d'un aéronef selon l'art antérieur,
- la figure 2 est une coupe d'une partie de la structure du fuselage d'un aéronef selon l'art antérieur,
- la figure 3 est une coupe illustrant une partie de la structure du fuselage d'un aéronef selon l'invention,
- les figures 4A à 4C sont des coupes illustrant les différentes étapes de réalisation d'un cadre selon une variante de l'invention,
- la figure 5 est une vue en perspective depuis un premier point situé à l'intérieur du fuselage d'une partie d'une structure formant le fuselage d'un aéronef selon l'invention,
- la figure 6 est une vue en perspective depuis un second point situé à l'intérieur du fuselage d'une partie d'une structure formant le fuselage d'un aéronef selon l'invention,
- la figure 7A est une représentation schématique latérale illustrant une première étape du procédé de fabrication d'une structure formant le fuselage d'un aéronef selon l'invention,
- la figure 7B est une représentation schématique d'une coupe selon la ligne AA de la figure 7A,
- la figure 8A est une représentation schématique latérale illustrant une deuxième étape du procédé de fabrication d'une structure formant le fuselage d'un aéronef selon l'invention,
- la figure 8B est une représentation schématique d'une coupe selon la ligne AA de la figure 8A,
- la figure 9A est une représentation schématique latérale illustrant une troisième étape du procédé de fabrication d'une structure formant le fuselage d'un aéronef selon l'invention,
- la figure 9B est une représentation schématique d'une coupe selon la ligne AA de la figure 9A, et
- la figure 10 est une vue en perspective d'une structure selon invention formant un plancher prévu à l'intérieur du fuselage d'un aéronef.

Sur les figures 3, 5 et 6, on a représenté une partie du fuselage d'un aéronef, ce dernier comprend une peau 28 renforcée selon deux directions, par une première famille de raidisseurs appelés lisses 30 disposées selon la direction longitudinale de l'aéronef et par une seconde famille de raidisseurs appelés cadres 32 disposés dans des plans perpendiculaires à la direction longitudinale et qui assurent la reprise des efforts orbitaux.

Les lisses 30 sont généralement rapportées par tous moyens appropriés sur la surface intérieure de la peau 28.

De manière connue, la peau 28 se présente sous la forme d'une juxtaposition de panneaux ou tronçon complet de tôles métalliques reliés à la structure par rivetage ou tous moyens appropriés. En variante, ces panneaux peuvent être en matériau composite.

La peau 28 et les lisses 30 ne sont pas plus décrites car elles sont connues de l'homme du métier.

Selon l'invention, au moins un cadre 32 a une section creuse délimitée par un profil fermé dont une portion est en contact avec la peau.

Le profil fermé est réalisé pour une section donnée d'un seul tenant et ne découle pas de l'assemblage de plusieurs parties.

Selon l'invention, le profil fermé a une section en forme de trapèze. Ainsi, le cadre 32 comprend un premier pan 34 en contact avec la peau 28 ou en variante avec la lisse 30 correspondant à la grande base, un deuxième pan dit latéral 36 qui offre une surface d'appui, un troisième pan 38 sensiblement parallèle au premier pan 34 correspondant ci la petite base et un quatrième pan dit latéral 40 reliant les premier et troisième pan, incliné (non perpendiculaire) par rapport au premier pan 34.

Le profil fermé permet d'obtenir une forme en caisson qui augmente la rigidité du cadre si bien qu'il n'est plus nécessaire de prévoir des stabilisateurs.

Selon un autre point, le pan 38 qui correspond à la petite base permet d'augmenter le moment d'inertie dans un plan perpendiculaire à la peau.

Il sera apprécié que le profil fermé avec une section creuse peut présenter des parois avec des épaisseurs différentes afin d'optimiser la performance mécanique du cadre en fonction des sollicitations qui lui sont imposées en service. Ainsi, les pans 34, 40, 36 et 38 peuvent présenter des épaisseurs différentes.

Selon la section du cadre, l'angle entre la grande base du trapèze et le deuxième pan 36 est soit obtus, soit aigu afin de s'adapter à la courbure de la peau 28 et de conserver le pan latéral 36 perpendiculaire à l'axe longitudinal de l'aéronef. Le cadre 32 circulaire peut être réalisé en une seule pièce qui s'étend sur toute la circonférence ou être obtenu par l'assemblage de plusieurs secteurs mis bout à bout.

Selon un autre aspect, le cadre 32 peut avoir une section constante ou évolutive en fonction de la position de la section sur la circonférence. Ainsi, la distance entre la grande base 34 et la petite base 38 peut varier comme l'écartement entre les deux pans latéraux 36, 40 et/ou l'inclinaison du pan latéral 40.

selon un mode de réalisation, le cadre 32 peut être métallique et être réalisé à partir d'un profilé issu d'une filière puis cintré.

Selon un mode de réalisation, le cadre 32 peut être réalisé en matériau composite, grâce à des procédés connus comme par exemple par pultrusion, par tissage, par procédés de drappage orbitaux,...

Après la mise en place de fibres, le cadre est polymérisé partiellement de manière à obtenir un élément mi-cuit ou totalement de manière à obtenir un élément cuit.

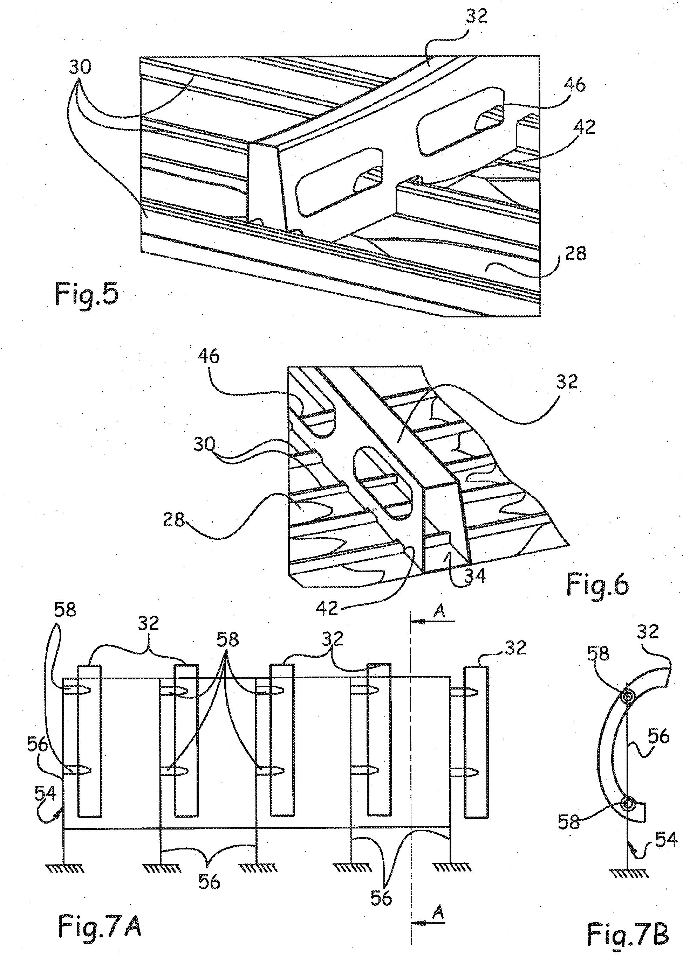

Comme illustré sur les figures 5 et 6, le cadre 32 comprend des découpes 42 au niveau du pan 34 correspondant à la grande base qui se prolongent également au niveau des pans latéraux 36 et 40 afin de laisser passer les lisses 30.

Pour l'alléger et/ou pour permettre d'assurer sa fixation sur la peau par des éléments de liaison 44 (fig. 3), comme par exemple des rivets, le pan latéral 40 incliné par rapport à la grande base 34 comprend des découpes 46.

Ces découpes 42 et 46 peuvent être réalisées par usinage. Le fait de prévoir un cadre 32 avec un profil creux permet de ne pas générer de défauts géométriques (liés à la fabrication du profil creux ou à l'usinage de découpes 42 et 46) et de s'affranchir des cales pour ajuster les éléments à assembler entre eux.

Lorsque la structure est métallique, elle forme une cage de Faraday qui protège les éléments disposés à l'intérieur de ladite cage et assure les fonctions de retour du courant électrique et de métallisation ou de mise au même potentiel des systèmes électriques.

Lorsque le cadre est réalisé en matériau composite, selon un mode de réalisation illustré sur les figures 4A à 4C, il peut intégrer les mêmes fonctions qu'un cadre métallique sur le plan électrique et comprendre au moins une couche en matériau conducteur.

Ainsi, dans un première phase illustrée sur la figure 4A, on réalise une coquille 48 en un matériau conducteur (grillage, tôle continue, métal déployé,..) sur laquelle est rapportée une couche 50, par exemple une nappe de fibre de verre, pour éviter la corrosion, comme illustré sur la figure 4B. En suivant, cette couche 50 est recouverte des fibres de renforts 52 utilisées pour constituer le cadre 32, comme illustré sur la figure 4C.

En variante, un maillage métallique peut être intercalé entre les plis de fibres du cadre.

Selon un autre avantage procuré par un cadre avec un profil creux, il est possible d'utiliser les cadres 32 pour assurer la mise en forme du panneau formant la peau.

selon un mode d'obtention, les cadres 32 d'une partie du fuselage sont disposés sur un premier outillage 54, comme illustré sur les figures 7A et 7B. Selon un mode de réalisation, le premier outillage 54 comprend un bâti comportant des montants 56, un pour chaque cadre 32, avec chacun des moyens de positionnement 58 du cadre. A cet effet, les montants 56 peuvent comprendre des pions comme moyens de positionnement 58 qui pénètrent dans des trous de centrage prévus sur chaque cadre. Ce premier outillage 54 permet de positionner les cadres de la même manière que dans la structure de la partie du fuselage à obtenir.

La peau 28 renforcée éventuellement par les lisses 30 est solidarisée à un second outillage 60 par tous moyens appropriés.

Dans cet état, la peau 28 peut difficilement se déformer en flexion selon une première direction en raison de la présence des lisses 30 mais peut se déformer selon une autre direction perpendiculaire à la première car elle n'est pas encore renforcée par les cadres 32.

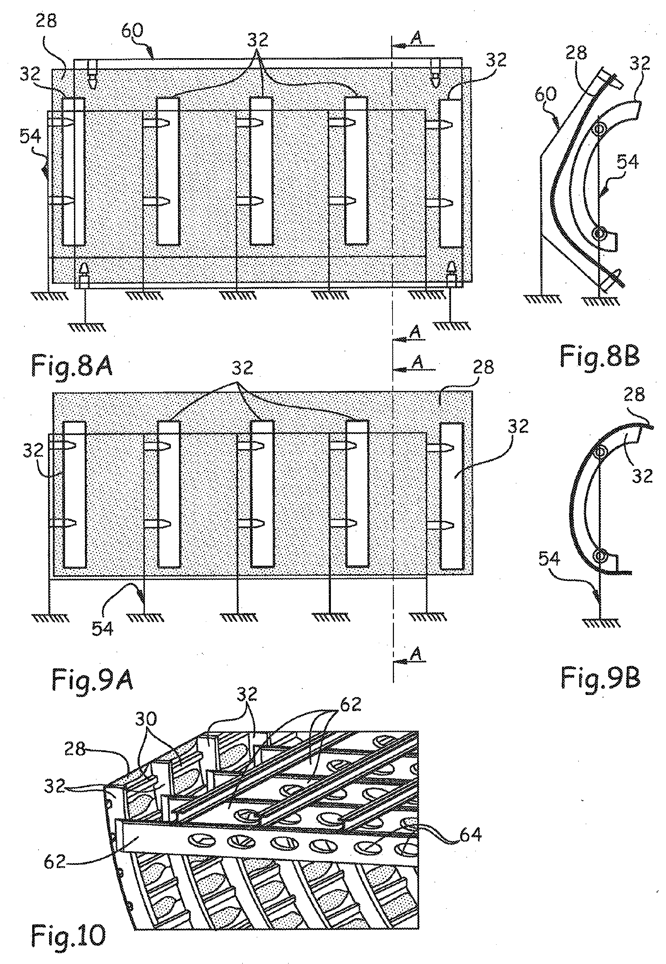

Les deux outillages 54 et 60 sont positionnés l'un par rapport à l'autre, comme illustré sur les figures 8A et 8B.

En suivant, la peau 28 est déformée en la plaquant contre les cadres 32 de manière à la conformer au rayon de courbure desdits cadres 32, comme illustré sur les figures 9A et 9B. Compte tenu de la rigidité des cadres 32 selon l'invention, il est possible de les utiliser comme outillage pour conformer la peau, contrairement aux cadres de l'art antérieur.

En suivant, les cadres 32 et la peau 28 sont solidarisés par tous moyens appropriés, soit par des éléments de liaison tels que des rivets ou soit par polymérisation.

Le profil particulier des cadres 32 de l'invention permet de supprimer les clips et les stabilisateurs. Compte tenu du nombre de pièces à assembler, les temps d'assemblage sont réduits et le nombre de contraintes dimensionnelles et géométriques est limité aux surfaces 34 et 36 des cadres 32 et à la surface intérieure de la peau 28.

En variante, les cadres 32 sont constitués d'un profilé orbital continu sur toute la circonférence de ladite structure (sans éclissage). Sur ces cadres, des panneaux juxtaposés sont plaqués ou un panneau présentant la forme d'un tube fendu est enfilé sur le squelette formé par des cadres orbitaux continus.

Le cadre avec un profil fermé et le procédé d'assemblage selon l'invention peuvent s'appliquer à des parties du fuselage correspondant aux tronçons d'un aéronef avec des sections sensiblement circulaires mais également à d'autres parties du fuselage comme à la pointe avant ou au cône arrière. Cette technique peut également être utilisée pour former les planchers d'un aéronef, comme illustré sur la figure 10. Dans ce cas, les traverses 62 d'un plancher peuvent avoir un profil fermé et creux comme les cadres 32.

Cette technique permet d'améliorer la tenue en torsion desdites traverses 62.

Avantageusement, les traverses 62 sont détourées à chaque extrémité de manière à obtenir une forme en biseau pour permettre leurs fixations aux cadres 32.

De préférence, les traverses 62 sont ajourées grâce à des découpes 64 de manière à les alléger ou pour accéder à intérieur de la traverse 62.

Les cadres 32 et les traverses 62 peuvent être combinées à des cadres et des traverses selon l'art antérieur.

Selon un autre avantage, la section creuse des traverses 62 et des cadres 32 peut être utilisée comme un chemin de câbles ou de tuyauteries.

## Revendications

1. Structure d'aéronef comportant une peau (28) renforcée selon deux directions, par une première famille de raidisseurs appelés lisses (30) disposées selon la direction longitudinal de l'aéronef et par une seconde famille de raidisseurs appelés cadres (32) disposés dans des plans perpendiculaires à la direction longitudinale et qui assurent la reprise des efforts orbitaux, au moins un cadre (32) a une section creuse, délimitée par un profil fermé réalisé pour une section donnée d'un seul tenant, ledit profil fermé ayant une forme en trapèze **caractérisée en ce que** la grande base du trapèze forme un premier pan (34) en contact avec la peau (28) au niveau duquel sont ménagées des découpes (42) qui se prolongent au niveau des pans adjacents (36, 40) audit premier pan (42).

2. Structure d'aéronef selon la revendication 1, **caractérisée en ce que** ledit au moins un cadre (32) comprend un pan perpendiculaire à l'axe longitudinal de l'aéronef.

3. Structure d'aéronef selon l'une quelconque des revendications précédentes, **caractérisée en ce que** ledit au moins un cadre (32) a une section creuse en forme de trapèze rectangle.

4. Structure d'aéronef selon l'une quelconque des revendications précédentes, **caractérisée en ce que** ledit au moins un cadre (32) comprend un premier pan (34) en contact avec la peau, un deuxième pan dit latéral (36), un troisième pan (38) et un quatrième pan dit latéral (40) reliant les premier ét troisième pan, incliné par rapport au premier pan (34) et ajouré grâce à des découpes (46).

5. Structure d'aéronef selon l'une quelconque des revendications précédentes, **caractérisée en ce que** ledit au moins un cadre (32) est réalisé en matériau composite et comprend au moins une couche en matériau conducteur.

6. Structure d'aéronef selon l'une quelconque des revendications précédentes, **caractérisé en ce que** ledit au moins un cadre (32) est continu sur toute la circonférence de ladite structure.

7. Structure d'aéronef selon l'une quelconque des revendications précédentes, **caractérisée en ce que** le profile fermé avec une section creuse présente des parois avec des épaisseurs différentes afin d'optimiser la performance mécanique du cadre.

8. Structure d'aéronef selon l'une quelconque des revendications précédentes, **caractérisée en ce qu'**elle comprend des traverses (56) sous forme chacune d'un profilé fermé et creux supportant un plancher.

9. Procédé d'assemblage d'une structure d'aéronef selon l'une quelconque des revendications précédentes, **caractérisé en ce qu'**il consiste à disposer des cadres (32) avec une section creuse délimitée par un profil fermé dont une portion est apte à être en contact avec la peau sur un premier outillage (54) selon l'agencement qu'ils ont dans la structure assemblée, à solidariser la peau (28) à un second outillage (60), a positionner les deux outillages (54, 60) l'un par rapport à l'autre, à déformer la peau (28) en la plaquant contre les cadres (32) de manière à la conformer au rayon de courbure desdits cadres (32), puis à solidariser lesdits cadres (32) et ladite peau (28).

## Patentansprüche

1. Struktur eines Luftfahrzeugs mit einer Haut (28), die in zwei Richtungen verstärkt ist, durch eine erste Gruppe von Versteifungen, die sogenannten Längsspanten (30), die in Längsrichtung des Luftfahrzeugs angeordnet sind, und durch eine zweite Gruppe von Versteifungen, die sogenannten Querspanten (32), die im rechten Winkel zur Längsrichtung angeordnet sind und die Aufnahme von orbitalen Kräften gewährleisten, wobei wenigstens ein Querspant (32) einen hohlen Querschnitt aufweist, der durch ein geschlossenes Profil begrenzt ist, das für einen gegebenen Abschnitt aus einem Stück hergestellt ist, wobei das geschlossene Profil die Gestalt eines Trapezes aufweist, **dadurch gekennzeichnet, dass** die Basis des Trapezes eine in Kontakt mit der Haut (28) stehende erste Seite (34) bildet, in deren Bereich Ausschnitte (72) vorgesehen sind, die sich bis in den Bereich der Seiten (36, 40) erstrecken, die zur ersten Seite (72) benachbart sind.

2. Struktur eines Luftfahrzeugs nach Anspruch 1, **dadurch gekennzeichnet, dass** der wenigstens eine Querspant (32) eine Seite aufweist, die im rechten Winkel zur Längsachse des Luftfahrzeugs steht.

3. Struktur eines Luftfahrzeugs nach einem der vorhergehenden Ansprüche, **dadurch gekennzeichnet, dass** der wenigstens eine Querspant (32) einen hohlen Querschnitt in der Gestalt eines Trapezes mit rechtem Winkel hat.

4. Struktur eines Luftfahrzeugs nach einem der vorhergehenden Ansprüche, **dadurch gekennzeichnet, dass** der wenigstens eine Querspant (32) eine in Kontakt mit der Haut stehende erste Seite (34), eine sogenannte seitliche zweite Seite (36), eine dritte Seite (38) und eine sogenannte seitliche vierte Seite (40) aufweist, die die erste und die dritte Seite verbindet, bezüglich der ersten Seite (34) geneigt ist und durch die Ausschnitte (46) durchbrochen ist.

5. Struktur eines Luftfahrzeugs nach einem der vorhergehenden Ansprüche, **dadurch gekennzeichnet, dass** der wenigstens eine Querspant (32) aus einem Verbundmaterial hergestellt ist und wenigstens eine Schicht aus einem leitenden Material aufweist.

6. Struktur eines Luftfahrzeugs nach einem der vorhergehenden Ansprüche, **dadurch gekennzeichnet, dass** sich der wenigstens eine Querspant (32) über den gesamten Umfang der Struktur fortsetzt.

7. Struktur eines Luftfahrzeugs nach einem der vorhergehenden Ansprüche, **dadurch gekennzeichnet, dass** das geschlossene Profil mit einem hohlen Querschnitt Wände mit verschiedenen Dicken aufweist, um die mechanische Leistungsfähigkeit des Querspants zu optimieren.

8. Struktur eines Luftfahrzeugs nach einem der vorhergehenden Ansprüche, **dadurch gekennzeichnet, dass** diese Querträger (56) jeweils in der Gestalt eines geschlossenen Hohlprofils aufweist, die eine Boden halten.

9. Herstellungsverfahren einer Struktur eines Luftfahrzeugs nach einem der vorhergehenden Ansprüche, **dadurch gekennzeichnet, dass** dieses darin besteht, Querspanten (32) mit einem hohlen Querschnitt, der von einem geschlossenen Profil begrenzt ist, von dem ein Abschnitt dazu geeignet ist, in Kontakt mit der Haut zu stehen, auf einem ersten Werkzeug (54) entsprechend einer Ordnung anzuordnen, die sie in der zusammengebauten Struktur einnehmen, die Haut (28) an einem zweiten Werkzeug (60) anzubringen, die beiden Werkzeuge (54, 60) aufeinander auszurichten, die Haut (28) zu verformen und sie an den Querspanten (32) derart anzubringen, dass diese sich an dem Krümmungsradius der Querspanten (32) anpassen, und dann die Querspanten (32) und die Haut (28) zu verbinden.

## Claims

1. Aircraft structure that comprises a skin (28) that is reinforced in two directions: by a first family of stiffeners called stringers (30) that are arranged in the longitudinal direction of the aircraft and by a second family of stiffeners called frames (32) that are arranged in planes that are perpendicular to the longitudinal direction and that ensure the taking up of orbital forces, at least one frame (32) having a hollow cross-section that is delimited by a closed profile, produced for a given cross-section in a single piece, said closed profile having a trapezoidal cross-section, **characterized in that** he large base of the trapezoidal cross-section is a first flat section (34) in contact with the skin at the level of which are made cutaways (42) that extend at the level of flat sections (36,40) that are adjacent to said first flat section (34).

2. Aircraft structure according to Claim 1, wherein said at least one frame (32) comprises a flat section that is perpendicular to the longitudinal axis of the aircraft.

3. Aircraft structure according to any of the preceding claims, wherein said at least one frame (32) has a hollow, rectangular-trapezoidal cross-section.

4. Aircraft structure according to any of the preceding claims, wherein said at least one frame (32) comprises a first flat section (34) in contact with the skin, a second so-called lateral flat section (36), a third flat section (38), and a fourth so-called lateral flat section (40) connecting the first and third flat sections, inclined relative to the first flat section (34) and perforated thanks to the cutaways (46).

5. Aircraft structure according to any one of the preceding claims, wherein said at least one frame (32) is produced from composite material and comprises at least one layer made of conductive material.

6. Aircraft structure according to any one of the preceding claims, wherein said at least one frame (32) is continuous over the entire circumference of said structure.

7. Aircraft structure according to any one of the preceding claims, wherein the closed profile with a hollow cross-section can have walls with different thicknesses so as to optimize the mechanical performance of the frame.

8. Aircraft structure according to any one of the preceding claims, wherein it comprises crosspieces (56), each in the form of a closed and hollow section that supports a deck.

9. Process for assembling an aircraft structure according to any one of the preceding claims, wherein it consists in arranging frames (32) with a hollow cross-section that is delimited by a closed profile of which one portion is able to be in contact with the skin on a first piece of equipment (54) according to the arrangement that they have in the assembled structure, to make the skin (28) integral with a second piece of equipment (60), to position the two pieces of equipment (54, 60) relative to one another, to deform the skin (28) by flattening it against the frames (32) in such a way as to shape it to the radius of curvature of said frames (32), and then to make said frames (32) and said skin (28) integral.
